(19) Europäisches Patentamt
European Patent Office
Office européen des brevets

(11) Veröffentlichungsnummer: **0 035 702**
**B1**

(12) # EUROPÄISCHE PATENTSCHRIFT

(45) Veröffentlichungstag der Patentschrift: **23.01.85**

(51) Int. Cl.⁴: **B 01 D 19/04**

(21) Anmeldenummer: **81101396.0**

(22) Anmeldetag: **26.02.81**

(54) **Schaumdämpfungsmittel, ihre Herstellung und Verwendung in wässrigen Systemen.**

(30) Priorität: **08.03.80 DE 3008952**

(43) Veröffentlichungstag der Anmeldung: **16.09.81 Patentblatt 81/37**

(45) Bekanntmachung des Hinweises auf die Patenterteilung: **23.01.85 Patentblatt 85/4**

(84) Benannte Vertragsstaaten: **CH DE FR GB IT LI**

(56) Entgegenhaltungen:
**CA - A - 922 456**
**DE - A - 2 420 955**
**DE - A - 2 654 739**
**US - A - 2 588 343**
**US - A - 2 612 478**
**US - A - 2 717 881**
**US - A - 3 923 683**
**US - A - 3 935 121**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Breyer, Karl-Heinz, Am Domberg 14, D-5067 Kürten-Biesfeld (DE)**
Erfinder: **Walz, Klaus, Dr., Domblick 4, D-5090 Leverkusen 31 (DE)**
Erfinder: **Kortmann, Wilfried, Auf der Dreische 3, D-5800 Hagen 5 (DE)**

**EP 0 035 702 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Gegenstand der Erfindung sind Schaumdämpfungsmittel, die einen flüssigen Kohlenwasserstoff, ein Bis-fettsäureamid und ein Tensid enthalten. Sie sind dadurch gekennzeichnet, daß sie

a) 70—98 Gew.-% eines bei Raumtemperatur flüssigen Kohlenwasserstoffs mit einem Siedepunkt über 150°C,
b) 0,5—8 Gew.-% eines Amids der Formel

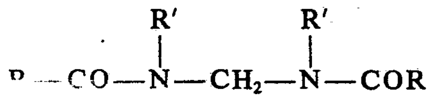

(I)

in der

R für $C_{10}—C_{22}$-Alkyl oder -Alkenyl und
R′ für H, $C_1—C_4$-Alkyl oder beide R′ zusammen für eine 1,2-Ethylenbrücke

stehen,

c) 0,5—15 Gew.-% eines nichtionischen Tensids und
d) 0—8 Gew.-% eines kationischen Tensids

enthalten,

ein Verfahren zu ihrer Herstellung und ihre Verwendung zur Entschäumung oder zur Verhinderung der Schaumbildung von wäßrigen Systemen.

Als bei Raumtemperatur flüssige Kohlenwasserstoffe kommen aliphatische, alicyclische und/oder aromatische Kohlenwasserstoffe in Betracht, deren Siedepunkt über 150°C liegt. Vorzugsweise kommen aliphatische Kohlenwasserstoffe, die gegebenenfalls unterschiedliche Mengen an cycloaliphatischen und/oder aromatischen Kohlenwasserstoffen enthalten können, zum Einsatz. Als Beispiele hierfür seien die aliphatischen Kohlenwasserstoffe Dodecan, Tetradecan, Hexadecan, Octadecan, Eicosan oder deren Mischungen, synthetische Kohlenwasserstoffe, wie sie beispielsweise bei der Fischer-Tropsch-Synthese erhalten werden, oder technische Mineralöle aus unterschiedlich raffinierten Erdölen, wie sie beispielsweise als Paraffinöle, Spindelöle oder Weißöle im Handel sind, genannt.

Als Amide der Formel (I) seien beispielsweise genannt: Methylen-bis-myristinsäureamid, Methylen-bis-palmitinsäureamid, Methylen-bis-stearinsäureamid, Methylen-bis-eikosansäureamid, Methylen-bis-behensäureamid, Methylen-bis-ölsäureamid, Methylen-bis-linolsäureamid, 1,3-Bis-lauroylimidazolidin oder 1,3-Bis-stearyl-imidazolidin. Bevorzugte Zusammensetzungen enthalten Methylen-bis-stearinsäureamid, Methylen-bis-eikosansäureamid oder Methylen-bis-behensäureamid, insbesondere jedoch Methylen-bis-stearinsäureamid. Die Verbindungen sind größtenteils bekannt und lassen sich nach bekannten Verfahren, wie sie beispielsweise in der DE-A-2 202 831 oder in der US-A-2 554 846 beschrieben sind, herstellen.

Geeignete nichtionische Tenside sind Umsetzungsprodukte von 8 bis 20 Kohlenstoffatome enthaltenden, gegebenenfalls ungesättigten Fettsäuren, Fettsäureamiden, Fettalkoholen oder Fettaminen oder $C_6—C_{12}$-Alkylphenolen mit Ethylenoxid und/oder Propylenoxid, sowie Derivate solcher Verbindungen, wie sie beispielsweise durch Veresterung der endständigen Hydroxylgruppen mit Carbonsäuren, wie Essigsäure, Laurinsäure oder Benzoesäure, oder durch Veretherung mit z. B. Isobutylen oder Alkylchloriden erhalten werden. Weitere geeignete nichtionische Tenside sind auch oberflächenaktive Derivate von mehrwertigen Alkoholen, beispielsweise Fettsäureester von Säuren mit 10—22 Kohlenstoffatomen und Pentiten, Hexiten, Pentosen, Hexosen oder Polysacchariden, sowie deren Oxethylierungsprodukte. Bevorzugte nichtionische Tenside sind Umsetzungsprodukte von 12—18 Kohlenstoffatome enthaltenden Fettsäuren oder Fettsäureamiden mit 3—10 Mol Ethylenoxid, von 8—18 Kohlenstoffatome enthaltenden Fettalkoholen oder von $C_8—C_9$-Alkylphenolen mit 3—10 Mol Ethylenoxid, oder Ester solcher Verbindungen mit 12—18 Kohlenstoffatome enthaltenden Fettsäuren.

Als weitere Tenside enthalten die Zusammensetzungen 0—8%, vorzugsweise 0,5—3% einer kationaktiven Verbindung. Als kationaktive Verbindungen seien beispielsweise genannt:

Salze von Aminen, die neben mindestens einem basischen Stickstoffatom mindestens einen 10—20 Kohlenstoffatom enthaltenden Alkyl- oder Alkenylrest enthalten, hiervon abgeleitete quaternäre Ammoniumverbindungen, heterocyclische Verbindungen, wie Alkylpyridiniumsalze, Imidazoliniumverbindungen sowie Aminoxide oder Sulfoniumverbindungen. Vorzugsweise enthalten die Zusammensetzungen als kationische Tenside solche der Formel

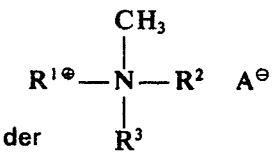

in der

$R^1$ für einen $C_{12}$—$C_{20}$-Alkyl- oder -Alkenylrest,
$R^2$ für die Hydroxyethyl- oder Hydroxypropylgruppe,
$R^3$ für $R^2$ oder Methyl und
$A^{\ominus}$ für ein Anion, insbesondere für $Cl^{\ominus}$, $Br^{\ominus}$ oder $CH_3SO_4^{\ominus}$

stehen.

Als weitere Zusätze enthalten die Zusammensetzungen beispielsweise Wasser, Lösungsmittel wie niedere Alkohole, Glykole, sowie andere entschäumende Verbindungen, beispielsweise Fettalkohole, wie 2-Ethylenhexanol, Dodecylalkohol oder Stearylalkohol, Polypropylenglykole, Ethylenoxid-Propylenoxid-Blockpolymerisate, Fettsäuren oder deren Salze, Fettsäureester oder Paraffinwachse.

Bevorzugte Entschäumungsmittel enthalten

a) 80—90% eines Kohlenwasserstoffs mit einem Siedepunkt von mindestens 270° C,
b) 2—6% eines Amids der Formel (I), insbesondere Methylen-bis-stearinsäureamid,
c) 4—10% eines nichtionischen Tensids, insbesondere eines Umsetzungsproduktes eines 8—18 Kohlenstoffatome enthaltenden aliphatischen Alkohols, Fettsäureamids oder einer Fettsäure mit 3—10 Mol Ethylenoxid, und
d) 0,5—3% eines kationischen Tensids, insbesondere einer Verbindung der Formel

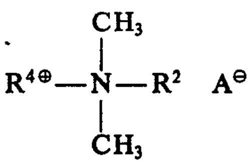

in der $R^2$ und $A^{\ominus}$ die obengenannte Bedeutung besitzen, und $R^4$ für einen $C_{16}$—$C_{20}$-Alkyl- oder -Alkenylrest steht.

Zur Herstellung der erfindungsgemäßen Zusammensetzungen können die einzelnen Komponenten in beliebiger Reihenfolge miteinander vermischt werden. Hierzu wird die Mischung über den Schmelzpunkt des Amids der Formel (I) erhitzt und anschließend unter gutem Rühren möglichst rasch auf Temperaturen unter 40° C abgekühlt.

In einer bevorzugten Ausführungsform wird das Amid der Formel (I) in einem Teil des verwendeten Kohlenwasserstoffs bei 100—150° C gelöst und die heiße Lösung dann langsam in eine auf 10—80° C, vorzugsweise 20—40° C gehaltene Mischung aus dem restlichen Kohlenwasserstoff, den Emulgatoren und gegebenenfalls weiteren Zusätzen eingetragen. Der nichtionische Emulgator kann auch ganz oder teilweise zur heißen Lösung des Amids im Kohlenwasserstoff gegeben werden.

Die erfindungsgemäßen Schaumdämpfungsmittel eignen sich hervorragend zur Schaumdämpfung und zur Verhinderung der Schaumbildung in wäßrigen, zum Schäumen neigenden Systemen. Insbesondere sind sie für den Einsatz in allen Verarbeitungsstufen der Textilindustrie, wie z. B. beim Entschlichten, Bleichen, bei der Vorbehandlung, beim Färben, Drucken, Nachwaschen, bei der Appretur und Hochveredelung, geeignet. Weitere Einsatzgebiete sind beispielsweise die Zucker-, Papier-, Leder- und Lackindustrie.

Die jeweiligen Einsatzmengen der Schaumdämpfungsmittel richten sich im allgemeinen nach dem Gehalt der wäßrigen Systeme an schäumenden Komponenten und nach den apparativen Gegebenheiten. Sie können durch einfache Vorversuche leicht ermittelt werden. Für Textilbehandlungsbäder haben sich im allgemeinen Mengen von 0,5—3 g/l bzw. 0,5—5 g/kg bei Druckpasten als ausreichend erwiesen.

Gegenüber den bisher häufig verwendeten siliconhaltigen Schaumdämpfungsmitteln besitzen die erfindungsgemäßen Schaumdämpfungsmittel den Vorteil, daß sie nicht zu den schlecht entfernbaren, gefürchteten Siliconflecken auf den behandelten Textilien führen. Dieser Vorteil wirkt sich besonders beim Arbeiten in kurzen Flottenverhältnissen, z. B. 1 : 5 bis 1 : 15 aus, da hierbei die Emulsionen von siliconhaltigen Schaumdämpfungsmitteln durch die in Apparaten auftretende hohe Mechanik zerschlagen werden. Ein weiterer Vorteil der erfindungsgemäßen Schaumdämpfungsmittel liegt in ihrer höheren Stabilität gegenüber Frosteinwirkung. Siliconhaltige Schaumdämpfungsmittel-Emulsionen werden unter diesen Bedingungen instabil.

Gegenüber handelsüblichen, siliconfreien Schaumdämpfungsmitteln auf Mineralöl- oder Polyetherbasis zeichnen sich die erfindungsgemäßen Schaumdämpfungsmittel dadurch aus, daß sie eine gleichbleibende schaumdämpfende Wirkung in stark saurem, im neutralen und im alkalischen Bereich

zeigen.

Aus der DE-A1-2 654 739 sind Antischaummittel bekannt, die Carbonsäure-bisamide enthalten und bei der Zuckerrübenverarbeitung Verwendung finden. Die Beispiele sind auf Mittel beschränkt, die Ethylen-bis-stearinsäureamid enthalten. Derartige Mittel sind jedoch für eine allgemeine Anwendbarkeit in wäßrigen Systemen, insbesondere bei unterschiedlichen pH-Werten, nur wenig geeignet, da ihre schaumdämpfende Wirkung nicht befriedigt.

Die schaumdämpfende Wirkung der erfindungsgemäßen Produkte wurde nach der in »Bayer Farben Revue« Sonderheft 9, August 1967, S. 77, beschriebenen Methode geprüft.

Bei Produktvergleichen werden bei Überschreitung der 15-Sekunden-Grenze die Prüfmengen des Entschäumers so lange erhöht, bis der Schaum innerhalb des genannten Zeitraumes von 0—15 Sekunden zerfällt.

### Beispiel 1

In 405 Teilen eines Mineralöls (Dichte bei 15° C: 0,900; Viskosität bei 20° C: 13,2 $mm^2 \cdot s^{-1}$, Siedeintervall 282—332° C) werden bei 70—80° C 11,2 Teile Stearyl-dimethyl-hydroxyethyl-ammoniumchlorid und 42 Teile eines Umsetzungsproduktes von einem $C_{12}$—$C_{14}$-Fettalkohol mit 3 Mol Ethylenoxid gelöst. Die erhaltene Lösung wird auf 20—30° C abgekühlt und bei dieser Temperatur unter gutem Rühren langsam mit einer auf 120° C erhitzten Lösung von 21 Teilen Methylen-bis-stearinsäureamid in 400 Teilen Mineralöl versetzt. Es werden ca. 890 Teile einer öligen Flüssigkeit erhalten, aus der sich durch einfaches Eingießen in Wasser und Umrühren eine stabile Emulsion herstellen läßt.

Dichte 0,9; Durchlaufzeit im Fordbecher (4-mm-Düse): 18 Sek.

### Beispiel 2

3,5 Teile des nachstehend beschriebenen Benzyliden-bis-stearinsäureamids, 31,5 Teile Methylen-bis-stearinsäureamid, 1150 Teile des in Beispiel 1 verwendeten Mineralöls und 60 Teile eines Umsetzungsproduktes von 1 Mol eines technischen Laurylalkohols mit 3 Mol Ethylenoxid werden bei 140° C bis zur Bildung einer klaren Lösung gerührt. Die Lösung wird langsam auf 98° C abgekühlt, bei dieser Temperatur mit 24 Teilen Stearyl-dimethyl-hydroxyethyl-ammoniumchlorid versetzt und anschließend unter gutem Rühren innerhalb von ca. 1 Stunde auf 30° C abgekühlt. Es werden ca. 1260 Teile einer hellbraunen, viskosen Flüssigkeit erhalten, die durch einfaches Einrühren in Wasser eine stabile Emulsion bildet.

Das eingesetzte Benzyliden-bis-stearinsäureamid wurde hergestellt, indem 283 Teile Stearinsäureamid in Gegenwart von 1,5 Teilen konz. Schwefelsäure bei 140° C mit 53 Teilen Benzaldehyd versetzt wurden. Nach einer Reaktionszeit von 3—4 Stunden wurde das gebildete Reaktionswasser in Vakuum abdestilliert. Beim Erkalten erstarrt die Schmelze zu 315 Teilen Benzyliden-bis-stearinsäureamid.

### Beispiel 3

5,25 Teile Methylen-bis-stearinsäureamid werden bei 120° C in 100 Teilen eines Mineralöls (Dichte bei 15° C: 0,853; Viskosität bei 20° C: 36 $mm^2 \cdot s^{-1}$, Siedeintervall 356—405° C) gelöst. Diese Lösung läßt man langsam bei 20—30° C zu einer Lösung zutropfen, die durch Vermischen von 101 Teilen des Mineralöls, 15,75 Teilen eines Umsetzungsproduktes von 1 Mol technischem Laurylalkohol mit 3 Mol Ethylenoxid, 2,8 Teilen Stearyl-dimethyl-hydroxyethyl-ammoniumchlorid und 0,7 Teilen Propylenglykol erhalten wurde. Es werden ca. 225 Teile einer öligen Flüssigkeit erhalten.

Dichte: 0,85; Durchlaufzeit im Fordbecher (4-mm-Düse): 22 Sek. Das Produkt läßt sich mit Wasser zu einer stabilen Emulsion verdünnen.

### Beispiel 4

42 Teile Methylen-bis-stearinsäureamid werden bei 120° C in 400 Teilen eines Fischer-Tropsch-Kohlenwasserstoffs mit einer mittleren Kohlenstoffzahl von 15 gelöst. Diese Lösung läßt man unter gutem Rühren langsam in eine auf 20—30° C gekühlte Lösung einlaufen, die durch Vermischen von 42 Teilen eines Umsetzungsproduktes von techn. Laurylalkohol mit 3 Mol Ethylenoxid, von 11,2 Teilen Octadecyl-dimethyl-hydroxyethyl-ammoniumchlorid und 400 Teilen desselben Kohlenwasserstoffs erhalten wurde. Es werden ca. 890 Teile eines weißen Öls erhalten.

Dichte: 0,85; Durchlaufzeit im Fordbecher (4-mm-Düse): 18 Sek. Das Produkt läßt sich mit Wasser zu einer stabilen Emulsion verdünnen.

## Beispiel 5

In 402 Teilen des in Beispiel 1 verwendeten Mineralöls werden bei 70—80° C 16 Teile eines Natriumalkansulfonats (mittlere Kettenlänge: $C_{21}$) und 63 Teile eines Umsetzungsproduktes von einem $C_{12}-C_{14}$-Fettalkohol mit 3 Mol Ethylenoxid gelöst. Die erhaltene Lösung wird auf 20—30° C abgekühlt und bei dieser Temperatur unter gutem Rühren langsam mit einer auf 120° C erhitzten Lösung von 20,5 Teilen Methylen-bis-stearinsäureamid in 402 Teilen Mineralöl versetzt. Es werden ca. 900 Teile einer öligen Flüssigkeit erhalten, die durch einfaches Eingießen in Wasser und Umrühren emulgiert werden kann.

Dichte: 0,9; Durchlaufzeit im Fordbecher (4-mm-Düse): 47 Sek.

## Beispiel 6

Gemäß der vorstehend genannten Vorschrift wurden die Schaumdämpfungsmittel nebeneinander geprüft:

Einsatzmengen:

0,2 g/l Schaumdämpfungsmittel und
0,4 g/l eines Umsetzungsproduktes von 1 Mol Oleylalkohol mit 50 Mol Ethylenoxid.

| | Temperatur 25° | | | 50° | | | 75° | | | Kochtemperatur | | |
|---|---|---|---|---|---|---|---|---|---|---|---|---|
| | pH-Wert 2 | 7 | 12 | 2 | 7 | 12 | 2 | 7 | 12 | 2 | 7 | 12 |
| Prod. gemäß Beispiel 1 | 0/2*) | 0/3 | 0/3 | 0/1 | 0/2 | 0/2 | 0/4 | 0/3 | 0/3 | 0/3 | 0/4 | 0/3 |
| Prod. gemäß Beispiel 2 | 0/2 | 0/1 | 0/3 | 0/2 | 0/2 | 0/2 | 0/7 | 0/8 | 0/8 | 0/6 | 0/5 | 0/5 |
| Prod. gemäß Beispiel 3 | 0/3 | 0/3 | 0/2 | 0/2 | 0/3 | 0/3 | 0/3 | 0/4 | 0/3 | 0/4 | 0/3 | 0/3 |
| Prod. gemäß Beispiel 4 | 0/2 | 0/2 | 0/2 | 0/2 | 0/3 | 0/3 | 0/9 | 0/13 | 0/10 | 0/10 | 0/14 | 0/12 |

*) Die erste Zahl bedeutet die Zeit in Sekunden, nach der die Schaumdecke nach Abstellen des Luftstroms aufreißt.
Die zweite Zahl bedeutet die Zeit in Sekunden, die bis zum völligen Verschwinden des Schaumes gebraucht wird.

**Patentansprüche**

1. Schaumdämpfungsmittel, die einen flüssigen Kohlenwasserstoff, ein Bis-fettsäureamid und ein Tensid enthalten, dadurch gekennzeichnet, daß sie

a) 70—98 Gew.-% eines bei Raumtemperatur flüssigen Kohlenwasserstoffs mit Siedepunkt über 150° C,
b) 0,5—8 Gew.-% eines Amids der Formel

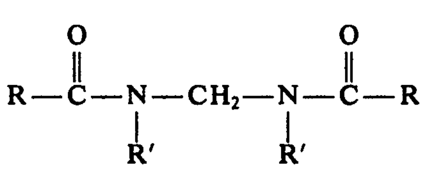

in der

R für einen $C_{10}-C_{22}$-Alkyl- oder -Alkenylrest und
R' für Wasserstoff, einen $C_1-C_4$-Alkylrest stehen oder beide R' zusammen für eine 1,2-Ethylenbrücke
stehen,

c) 0,5—15 Gew.-% eines nichtionischen Tensids und
d) 0—8 Gew.-% eines kationischen Tensids

enthalten.

2. Schaumdämpfungsmittel gemäß Anspruch 1, dadurch gekennzeichnet, daß sie als Komponente b) Methylen-bis-stearinsäureamid, Methylen-bis-eikosansäureamid und/oder Methylen-bis-behensäureamid enthalten.

3. Schaumdämpfungsmittel gemäß Ansprüchen 1 und 2, dadurch gekennzeichnet, daß sie als Komponente b) Methylen-bis-stearinsäureamid enthalten.

4. Schaumdämpfungsmittel gemäß Ansprüchen 1 bis 3, dadurch gekennzeichnet, daß sie als nichtionische Tenside Umsetzungsprodukte von $C_8-C_{18}$-Fettsäuren und/oder von $C_8-C_{18}$-Fettsäureamiden und/oder von $C_8-C_{18}$-Fettalkoholen und/oder von $C_6-C_9$-Alkylphenolen mit 3-10 Mol Ethylenoxid, oder Ester die durch Umsetzung der endständigen Hydroxylgruppen dieser Verbindungen mit $C_{12}-C_{18}$-Fettsäuren entstehen, enthalten.

5. Schaumdämpfungsmittel gemäß Ansprüchen 1 bis 4, dadurch gekennzeichnet, daß sie als nichtionische Tenside Umsetzungsprodukte von $C_8-C_{18}$-Fettalkoholen, -Fettsäuren und/oder -Fettsäureamiden mit 3—10 Mol Ethylenoxid enthalten.

6. Schaumdämpfungsmittel gemäß Ansprüchen 1 bis 5, dadurch gekennzeichnet, daß sie als kationische Tenside solche der Formel

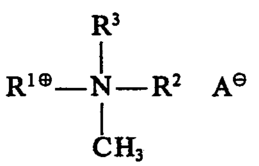

enthalten, in der

$R^1$ für einen $C_{12}-C_{20}$-Alkyl- oder -Alkenylrest,
$R^2$ für die Hydroxyethyl- oder Hydroxypropylgruppe,
$R^3$ für $R^2$ oder Methyl und
$A^\ominus$ für ein Anion

stehen.

7. Schaumdämpfungsmittel gemäß Anspruch 1 bis 6, dadurch gekennzeichnet, daß sie

a) 80—90 Gew.-% eines Kohlenwasserstoffs mit einem Siedepunkt von mindestens 270° C,
b) 2—6 Gew.-% Methylen-bis-stearinsäureamid
c) 4—10 Gew.-% eines Umsetzungsproduktes von 8—18 Kohlenstoffatome enthaltenden Fettalkoholen und/oder Fettsäuren und/oder Fettsäureamiden mit 3 bis 10 Mol Ethylenoxid und
d) 0,5—3 Gew.-% eines kationischen Tensids der Formel

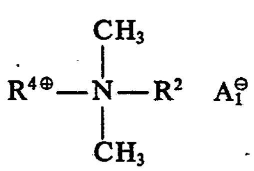

in der

$R^4$ für einen $C_{16}-C_{20}$-Alkyl- oder Alkenylrest steht und
$A_1^\ominus$ für $Cl^\ominus$, $Br^\ominus$ oder $CH_3SO_4^\ominus$ steht,

enthalten.

8. Verfahren zur Herstellung von Schaumdämpfungsmitteln gemäß Ansprüchen 1 bis 7, dadurch gekennzeichnet, daß man eine auf 100—150°C erhitzte Lösung der Komponente b) in einem Teil des Kohlenwasserstoffs unter gutem Rühren langsam zu einer auf 10—80°C gehaltenen Lösung der Komponente c) und gegebenenfalls der Komponente d) in der restlichen Menge des Kohlenwasserstoffs

zulaufen läßt.

9. Verwendung der Schaumdämpfungsmittel gemäß Ansprüchen 1 bis 7 zur Verhinderung der Schaumbildung von wäßrigen Systemen.

10. Verwendung der Schaumdämpfungsmittel gemäß Ansprüchen 1 bis 7 zur Verhinderung der Schaumbildung oder zur Entschäumung von Textilbehandlungsflotten.

## Claims

1. Anti-foaming agents which contain a liquid hydrocarbon, a bis-fatty acid amide and a surfactant, characterised in that they contain

a) 70—98% by weight of a hydrocarbon which is liquid at room temperature and has a boiling point higher than 150° C,
b) 0.5—8% by weight of an amide of the formula

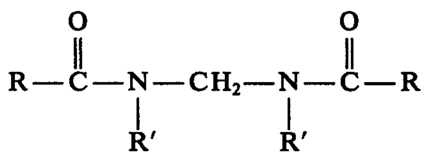

in which

R represents a $C_{10}$—$C_{22}$-alkyl or -alkenyl radical and
R′ represents hydrogen or a $C_1$—$C_4$-alkyl radical or both R′s together represent a 1,2-ethylene bridge,

c) 0.5—15% by weight of a non-ionic surfactant and
d) 0—8% by weight of a cationic surfactant.

2. Anti-foaming agents according to Claim 1, characterised in that they contain methylene-bis-stearic acid amide, methylene-bis-eicosanoic acid amide and/or methylene-bis-behenic acid amide as component b).

3. Anti-foaming agents according to Claims 1 and 2, characterised in that they contain methylene-bis-stearic acid amide as component b).

4. Anti-foaming agents according to Claims 1 to 3, characterised in that they contain reaction products of $C_8$—$C_{18}$-fatty acids and/or of $C_8$—$C_{18}$-fatty acid amides and/or of $C_8$—$C_{18}$-fatty alcohols and/or of $C_6$—$C_9$-alkylphenols and 3—10 mols of ethylene oxide, or esters which are formed by reacting the terminal hydroxyl groups of these compounds with $C_{12}$—$C_{18}$-fatty acids, as the non-ionic surfactants.

5. Anti-foaming agents according to Claims 1 to 4, characterised in that they contain reaction products of $C_8$—$C_{18}$-fatty alcohols, -fatty acids and/or -fatty acid amides and 3—10 mols of ethylene oxide as the non-ionic surfactants.

6. Anti-foaming agents according to Claims 1 to 5, characterised in that they contain, as cationic surfactants, those of the formula

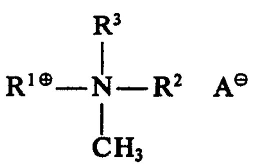

in which

$R^1$ represents a $C_{12}$—$C_{20}$-alkyl or -alkenyl radical,
$R^2$ represents the hydroxyethyl or hydroxypropyl group,
$R^3$ represents $R^2$ or methyl and
$A^\ominus$ represents an anion.

7. Anti-foaming agents according to Claims 1 to 6, characterised in that they contain

a) 80—90% by weight of a hydrocarbon having a boiling point of at least 270° C,
b) 2—6% by weight of methylene-bis-stearic acid amide,
c) 4—10% by weight of a reaction product of fatty alcohols and/or fatty acids and/or fatty acid

amides containing 8—18 carbon atoms and 3 to 10 mols of ethylene oxide, and

d) 0.5—3% by weight of a cationic surfactant of the formula

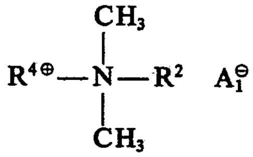

in which

$R^4$ represents a $C_{16}$—$C_{20}$-alkyl or alkenyl radical and
$A_1^{\ominus}$ represents $Cl^{\ominus}$, $Br^{\ominus}$ or $CH_3SO_4^{\ominus}$.

8. Process for the preparation of anti-foaming agents according to Claims 1 to 7, characterised in that a solution, heated to 100—150° C, of component b) in a portion of the hydrocarbon, is allowed to run slowly, while stirring well, into a solution, kept at 10—80° C, of component c) and, if appropriate, component d) in the remaining amount of the hydrocarbon.

9. Use of the anti-foaming agents according to Claims 1 to 7 for preventing the formation of foam or for defoaming aqueous systems.

10. Use of the anti-foaming agents according to Claims 1 to 7 for preventing the formation of foam or for defoaming textile treatment liquors.

**Revendications**

1. Agents anti-mousse renfermant un hydrocarbure liquide, un bis-amide gras et un agent de surface, caractérisés en ce qu'ils contiennent

a) 70 à 98% en poids d'un hydrocarbure liquide à la température ambiante possédant un point d'ébullition au-dessus de 150° C,

b) 0,5 à 8% en poids d'un amide de formule

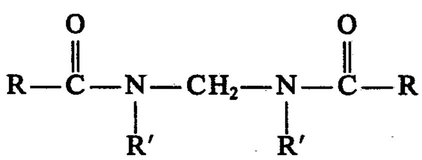

dans laquelle

R représente un reste alcoyle ou alcényle en $C_{10}$—$C_{22}$ et
R′ représente un hydrogène, un reste alcoyle en $C_1$—$C_4$ ou les deux R′ ensemble représentent un pont éthylène 1,2,

c) 0,5 à 15% en poids d'un agent de surface non ionique, et

d) 0 à 8% en poids d'un agent de surface cationique.

2. Agents anti-mousse selon la revendication 1, caractérisés en ce qu'ils contiennent en tant que constituant b) du méthylène-bis-stéaramide, du méthylène-bis-eicosamide et/ou du méthylène-bis-béhénamide.

3. Agents anti-mousse selon les revendications 1 et 2, caractérisés en ce qu'ils contiennent du méthylène-bis-stéaramide en tant que constituant b).

4. Agents anti-mousse selon les revendications de 1 à 3, caractérisés en ce qu'ils contiennent, en tant qu'agents de surface non ioniques, des produits de réaction d'acides gras en $C_8$—$C_{18}$ et/ou d'amides gras en $C_8$—$C_{18}$ et/ou d'alcools gras en $C_8$—$C_{18}$ et/ou d'alcoylphénols en $C_6$—$C_9$ avec 3 à 10 moles d'oxyde d'éthylène ou des esters issus de la réaction des groupes hydroxyles terminaux de ces composés avec des acides gras en $C_{12}$—$C_{18}$.

5. Agents anti-mousse selon les revendications de 1 à 4, caractérisés en ce qu'ils contiennent, en tant qu'agents de surface non ioniques, des produits de réaction d'alcools gras, d'acides gras et/ou d'amides gras en $C_8$—$C_{18}$ avec 3 à 10 moles d'oxyde d'éthylène.

6. Agents anti-mousse selon les revendications de 1 à 5, caractérisés en ce qu'ils contiennent, en tant qu'agents de surface cationiques, ceux de formule

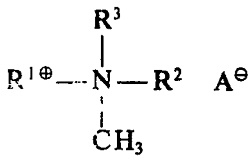

dans laquelle

$R^1$ représente un reste alcoyle ou alcényle en $C_{12}-C_{20}$,
$R^2$ le groupe hydroxyéthyle ou hydroxypropyle,
$R^3$ représente $R^2$ ou un méthyle et
$A^{\ominus}$ un anion.

7. Agents anti-mousse selon les revendications de 1 à 6, caractérisés en ce qu'ils contiennent

a) 80 à 90% en poids d'un hydrocarbure possédant un point d'ébullition d'au moins 270° C,
b) 2 à 6% en poids de méthylène-bis-stéaramide,
c) 4 à 10% en poids d'un produit de réaction d'alcools gras et/ou d'acides gras et/ou d'amides gras renfermant 8 à 18 atomes de carbone avec 3 à 10 moles d'oxyde d'éthylène, et
d) 0,5 à 3% en poids d'un agent de surface cationique de formule

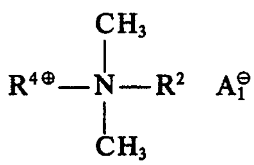

dans laquelle

$R^4$ représente un reste alcoyle ou alcényle en $C_{16}-C_{20}$ et
$A_1^{\ominus}$ représente $Cl^{\ominus}$, $Br^{\ominus}$ ou $CH_3SO_4^{\ominus}$.

8. Procédé pour la préparation d'agents anti-mousse selon les revendications de 1 à 7, caractérisés en ce qu'on introduit lentement, sous bonne agitation, une solution du constituant b) dans une partie de l'hydrocarbure, chauffée à 100—150° C dans une solution du constituant c) et éventuellement du constituant d) dans la quantité d'hydrocarbure restante, maintenue à 10—80° C.

9. Utilisation des agents anti-mousse selon les revendications de 1 à 7 pour empêcher la formation de mousse ou combattre la mousse des systèmes aqueux.

10. Utilisation des agents anti-mousse selon les revendications de 1 à 7 pour empêcher la formation de mousse ou combattre la mousse des bains de traitement des textiles.